# EUROPÄISCHE PATENTSCHRIFT

(11) **EP 1 793 131 B1**
(45) Veröffentlichungstag und Bekanntmachung des Hinweises auf die Patenterteilung: **24.12.2008**
(21) Anmeldenummer: 06022574.5
(22) Anmeldetag: 28.10.2006
(51) Int. Cl.: F16B 21/16

(54) **Vorrichtung zur Lagefixierung eines Gegenstands**
Device for fixing an object in position
Dispositif de fixation en position d'un objet

(30) Priorität: 30.11.2005 DE 102005057036; 21.06.2006 DE 202006009670 U
(43) Veröffentlichungstag der Anmeldung: 06.06.2007
(73) Patentinhaber: Dietz-automotive GmbH & Co. KG, 73265 Dettingen unter Teck (DE)
(72) Erfinder: Nitsche, Udo, 73730 Esslingen (DE)
(74) Vertreter: Ruckh, Rainer Gerhard

(56) Entgegenhaltungen:
- EP-A1- 1 103 734
- CH-A- 507 457
- FR-A- 2 363 020
- GB-A- 506 646
- US-A- 2 147 255
- US-A- 3 312 264
- US-A- 5 226 767

## Beschreibung

Die Erfindung betrifft eine Vorrichtung zur Lagefixierung eines Gegenstands.

Vorrichtungen dieser Art fixieren den jeweiligen Gegenstand mechanisch, wobei die Fixierung generell durch eine Verrastung erfolgt. Derartige nach dem Verrastungsprinzip arbeitende Vorrichtungen sind in unterschiedlichen Varianten in verschiedenartigen industriellen Applikationen im Einsatz.

Im einfachsten Fall sind zur Verrastung eines Gegenstands an einem ersten Element Rastnasen vorgesehen, die in entsprechende Ausnehmungen an einem zweiten Element greifen.

Generell kann zur Lagefixierung eines Gegenstands wenigstens ein Rastelement mit einer ersten Zahnung vorgesehen sein, welches in Eingriff mit einer zweiten Zahnung an einem Führungselement gebracht werden kann. Der zu fixierende Gegenstand ist dabei entweder vom Führungselement selbst gebildet oder fest mit diesem verbunden.

Die FR 2 363 020 A betrifft eine Vorrichtung zur Lagefixierung an Papierstapeln. Die Vorrichtung umfasst einen stangenförmigen Schaft mit einer ersten Zahnung sowie einer Kappe auf der Oberseite. Zur Lagefixierung kann von der Unterseite eine Verschlusskappe auf den Schaft aufgesteckt werden. Die Versclusskappe weist einen kreisförmigen Grundkörper auf, von dessen Innenseite über schmale Stege verbundne zweite Zähne hervorstehen. Durch Aufbiegen der Stege können die zweiten Zähne entgegen einer Belastungsrichtung über die ersten Zähne des Schafts gezogen werden, während bei in der Belastungsrichtung wirkender Kraft durch die ineinander greifenden ersten und zweiten Zähne die Verschlusskappe fest an dem Schaft gehalten ist

Die CH 507 457 A betrifft eine Verbindungseinrichtung mit einem Verbindungskörper, der konische Bohrungen aufweist, an deren Mantelflächen Innenverzahnungen vorgesehen sind. In diese Bohrungen sind Keilhülsen mit Außenverzahnungen vorgesehen, die bei Einführen in eine Bohrung mit deren Innenverzahnung verrasten.

Hierzu entsprechende Vorrichtungen sind aus der US 3,312,264, EP 1 103 734 A1, GB 506,646 A, US 5,226,767 und US 2,147,255 bekannt.

Der Erfindung liegt die Aufgabe zugrunde, eine Vorrichtung bereitzustellen, mittels derer eine zuverlässige und gleichzeitig einfach handhabbare Lagefixierung von Gegenständen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung weist zur Lagefixierung eines Gegenstandes ein Führungselement mit einer Zahnung und wenigstens ein Rastelement mit einer zweiten Zahnung, welches zur Lagefixierung in Eingriff mit der ersten Zahnung des Führungselements bringbar ist, auf. Die Zähne beider Zahnungen sind elastisch verformbar, so dass durch die elastischen Verformungen bei einer in einer Belastungsrichtung wirkenden Kraft die hierbei gegeneinander gepressten Flanken der Zähne formschlüssig aneinander anliegen.

Zur Gewährleistung der Elastizität der Zahnungen bestehen diese oder die gesamten Rastelemente und das Führungselement aus Kunststoff. Da durch die elastische Verformung unter Lasteneinwirkung die Zähne der Zahnungen des Führungselements und des oder der Rastelemente formschlüssig aneinander liegen, wird die Sperrwirkung der Rastelemente zur Lagefixierung des Führungselements erhöht.

Mit der so ausgebildeten erfindungsgemäßen Vorrichtung wird erreicht, dass bei in der Belastungsrichtung wirkenden Kräften durch die dann formschlüssig ineinander greifenden Zähne beider Zahnungen das oder die Rastelemente das Führungselement sicher fixieren und so einen sicheren Halt des Gegenstandes gewährleisten, der vom Führungselement selbst gebildet sein kann oder fest mit diesem verbunden sein kann.

Ein weiterer wesentlicher Vorteil der erfindungsgemäßen Vorrichtung besteht darin, dass das oder die Rastelemente bei in der Belastungsrichtung wirkenden Kräften das Führungselement blockieren und so lagefixieren. Jedoch ist das Führungselement gegen die Rastelemente in der den Belastungskräften entgegengesetzten Richtung bewegbar, so dass auf diese Weise einfach und ohne Hilfsmittel ein Lösen der Verbindung der Rastelemente und des Führungselements möglich ist, was zu einer flexiblen Handhabbarkeit der erfindungsgemä-Ben Vorrichtung führt.

Um eine sichere Verrastung der Rastelemente am Führungselement bei in Belastungsrichtung wirkenden Kräften und eine Lösbarkeit der Rastelemente vom Führungselement zu erzielen, sind in einer besonders vorteilhaften Ausführungsform die Zähne der Zahnungen asymmetrisch ausgebildet, so dass erste Flanken der Zähne der Zahnungen, welche durch in Belastungsrichtung wirkende Kräfte gegeneinander gepresst sind, eine höhere Flankensteilheit aufweisen als die jeweils zweiten Flanken der Zähne. Durch die auf diese Weise ausgebildeten Zahnungen wird auf besonders einfache Weise eine sichere Lagefixierung der Führungselemente bei in Belastungsrichtung wirkenden Kräften und eine leichte Lösbarkeit in entgegengesetzter Richtung erzielt.

Gemäß einer ersten vorteilhaften Ausführungsform sind zur Ausübung von vorgegebenen Anpresskräften auf das Führungselement die Rastelemente in geeigneten Aufnahmen gelagert. Besonders vorteilhaft ist hierbei die Aufnahmen als Hülse ausgebildet, in welche die Rastelemente Einsätze eingelegt werden können. Dabei ist wesentlich, dass die Hülse konische Segmente der Innenwände als Aufnahmen für die Einsätze aufweist, d. h. die Aufnahmen für die Rastelemente verjüngen sich von einem ersten Ende der Hülse zum zweiten Ende der Hülse hin. Dabei wirken die in Belastungsrichtung wirkenden Kräfte zum zweiten Ende der Hülse hin, wo die Aufnahmen für die Rastelemente ihre engsten Stellen aufweisen. Dadurch werden bei in Belastungsrichtung wirkenden Kräften die Rastelemente durch die Querschnittsverengung der Aufnahmen der Hülse am zweiten Ende gegen das Führungselement gedrückt, wodurch das Führungselement durch die so gesicherten Rastelemente sicher gehalten und lagefixiert werden. Demgegenüber kann die Hülse mit den Rastelementen in entgegengesetzter Richtung durch die sich zum ersten Ende der Hülse hin verbreiterten Aufnahmen für die Rastelemente leicht gegen das Führungselement geschoben werden, so dass die Rastelemente leicht vom Führungselement gelöst werden können. Die Bewegbarkeit der Rastelemente gegen das Führungselement wird dabei durch die Asymmetrie der Zähne der Zahnungen der Rastelemente und des Führungselements unterstützt.

Gemäß einer zweiten vorteilhaften Ausführungsform werden die Anstellkräfte der Rastelemente an das Führungselement durch auf die Rastelemente einwirkende Federkräfte erzeugt. Durch die Asymmetrie der Zähne der Zahnungen des oder der Rastelemente und des Führungselements ist gewährleistet, dass bei in Belastungsrichtung wirkenden Kräften die Rastelemente das Führungselement sicher fixieren. Demgegenüber können durch in entgegengesetzter Richtung wirkende Kräfte die Rastelemente gegen die Federkräfte verschoben werden und so das Führungselement gegen die Rastelemente zur Ablösung von den Rastelementen oder zur Durchführung von Einstellungen verschoben werden.

Die Erfindung wird im Nachstehenden anhand der Zeichnungen erläutert. Es zeigen
- Figur 1:: Einzeldarstellung von Komponenten einer ersten Vorrichtung zur Lagefixierung eines Gegenstandes
- Figur 2:: Querschnitt durch die fertig montierte Vorrichtung gemäß Figur 1
- Figur 3:: Zweites Ausführungsbeispiel einer Vorrichtung zur Lagefixierung eines Gegenstands
- Figur 4:: Anwendungsbeispiel für die Vorrichtung gemäß Figur 3
- Figur 5:: Einbau der Vorrichtung gemäß den Figuren 3 und 4 in einer Betätigungsvorrichtung für eine Feststellbremse
- Figur 6:: erfindungsgemäßes Ausführungsbeispiel einer Vorrichtung zur Lagefixierung eines Gegenstands.

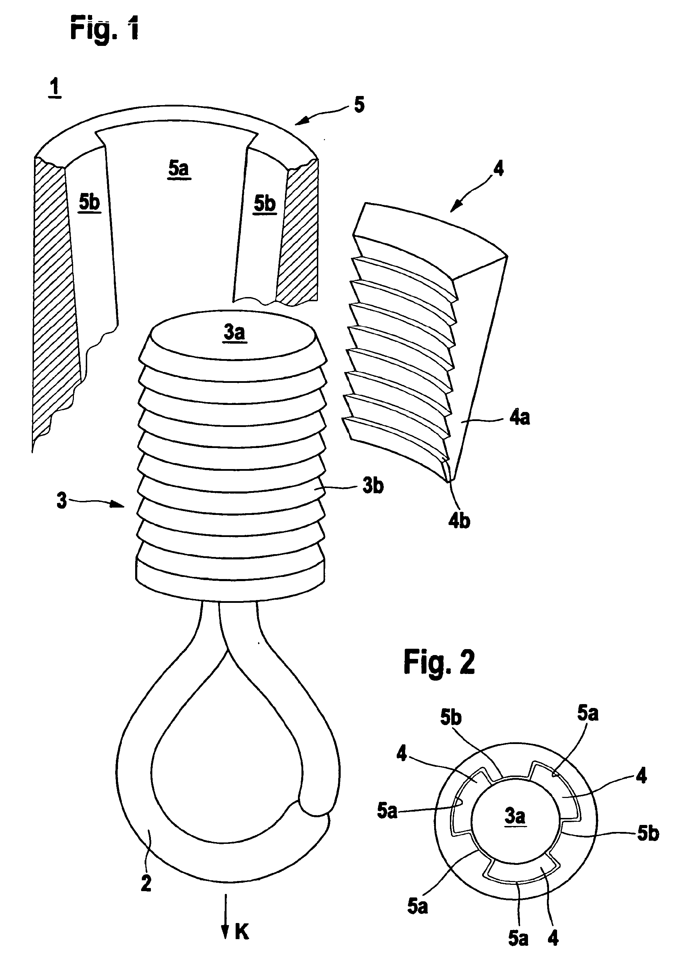

Die Figuren 1 und 2 zeigen ein erstes Ausführungsbeispiel einer Vorrichtung 1 zur Lagefixierung eines Gegenstandes. Die Vorrichtung 1 bildet im vorliegenden Fall eine Schwerlastkupplung zur Lagefixierung eines den Gegenstand bildenden Hakens 2.

An das obere Ende des Hakens 2 schließt ein aus Kunststoff bestehendes Führungselement 3 an, welches einen kreiszylindrischen Grundkörper 3a aufweist, an dessen Mantelfläche eine einstückig mit diesem ausgebildete Zahnung vorgesehen ist. Die Zahnung weist eine Anordnung von identisch ausgebildeten, in Längsrichtung des Führungselements 3 aneinander anschließenden Zähnen 3b auf die Zähne 3b erstrecken sich jeweils über den gesamten Umfang des Führungselements 3. Jeder Zahn 3b weist zwei auf die Spitze des Zahnes 3b verlaufende Flanken auf. Die dem Haken 2 zugewandten Flanken der Zähne 3b weisen dabei eine erheblich höhere Flankensteilheit auf als die dem Haken 2 abgewandten Flanken.

Zur Lagefixierung des Hakens 2 wird das Führungselement 3 in Eingriff mit Rastelementen gebracht, die im vorliegenden Fall von Einsätzen 4 gebildet sind, die in eine Hülse 5 eingesetzt werden. Die identisch ausgebildeten Einsätze 4 sowie die Hülse 5 bestehen aus Kunststoff.

Die Hülse 5 weist eine im Wesentlichen hohlzylindrische Form auf. Die Außenwand der Hülse 5 bildet die Mantelfläche eines Kreiszylinders.

Die Innenwand der Hülse 5 begrenzt einen Hohlraum, der entlang der Längsrichtung der Hülse 5 verläuft und an Öffnungen am unteren und oberen Rand der Hülse 5 ausmündet.

Im vorliegenden Fall sind drei identisch ausgebildete Rastelemente vorgesehen, die in drei Aufnahmen 5a, die von Ausnehmungen in der Innenwand der Hülse 5 gebildet sind, einsetzbar. Die identisch ausgebildeten Ausnehmungen sind drehsymmetrisch bezüglich der Symmetrieachse der Hülse 5 angeordnet, d. h. jeweils um 120° gegeneinander versetzt angeordnet. Die Segmente 5b der Innenwand zwischen den einzelnen Aufnahmen 5a bilden kreiszylindrische Flächensegmente.

Die Aufnahmen 5a für die Einsätze 4 sind konisch ausgebildet. Dementsprechend sind die die Böden der Ausnehmungen bildenden Segmente 5b der Innenwand der Hülse 5 von Schrägflächen 4a gebildet. Die so ausgebildeten Aufnahmen verjüngen sich kontinuierlich vom oberen Rand zum unteren Rand der Hülse 5. Weiterhin verringern sich die Breiten der Aufnahmen 5a vom oberen Rand zum unteren Rand der Hülse 5 hin.

Die Konturen der die Rastelemente bildenden Einsätze 4 sind an die Konturen der Aufnahmen 5a angepasst. Dementsprechend weist jeder Einsatz 4 an seiner Rückseite eine Schrägfläche 4a auf, deren Schräge an die Schräge der Innenwand im Bereich der Ausnehmung angepasst ist. Ebenso verringert sich die Breite eines Einsatzes 4 vom oberen zum unteren Rand hin.

An der Vorderseite eines Einsatzes 4 ist eine Zahnung mit Zähnen 4b vorgesehen. Die identisch ausgebildeten Zähne 4b bilden eine in Längsrichtung des Einsatzes 4 verlaufende Reihenanordnung, wobei sich die Zähne 4b über die gesamte Breite des Einsatzes 4 erstrecken. Die Konturen der Zähne 4b des Einsatzes 4b sind an die Konturen der Zähne 4b des Führungselements 3 angepasst. Demzufolge sind auch die Zähne 4b eines Einsatzes 4 asymmetrisch ausgebildet, wobei die dem oberen Rand des Einsatzes 4 zugewandten Flanken jeweils eine höhere Flankensteilheit als die jeweils zweiten Flanken der Zähne 4b aufweisen.

Zur Montage der Vorrichtung 1 wird das Führungselement 3 über den oberen Rand der Hülse 5 in diese eingeführt, wobei die Einsätze 4 am Führungselement 3 anliegend in die Aufnahmen 5a eingeschoben werden.

Durch die nach unten wirkende Gewichtskraft des Hakens 2 wird das Führungselement 3 in die Hülse 5 eingedrückt. Diese Kraft ist in Figur 1 mit K bezeichnet.

Die so in einer Belastungsrichtung wirkende Gewichtskraft drückt die Einsätze 4 gegen die unteren verengten Ränder der Aufnahme 5a wodurch das Führungselement 3 mit dem Haken 2 sicher in der Hülse 5 gelagert ist.

Die so gebildete Schwerlastkupplung für den Haken 2 kann einfach dadurch gelöst werden, indem der Haken 2 etwas angehoben wird. Dadurch werden die Rastelemente aus den Aufnahmen 5a gelöst wodurch sich das Führungselement 3 infolge der Asymmetrie auch gegen die Zähne 3b, 4b der Rastelemente nach oben bewegen kann.

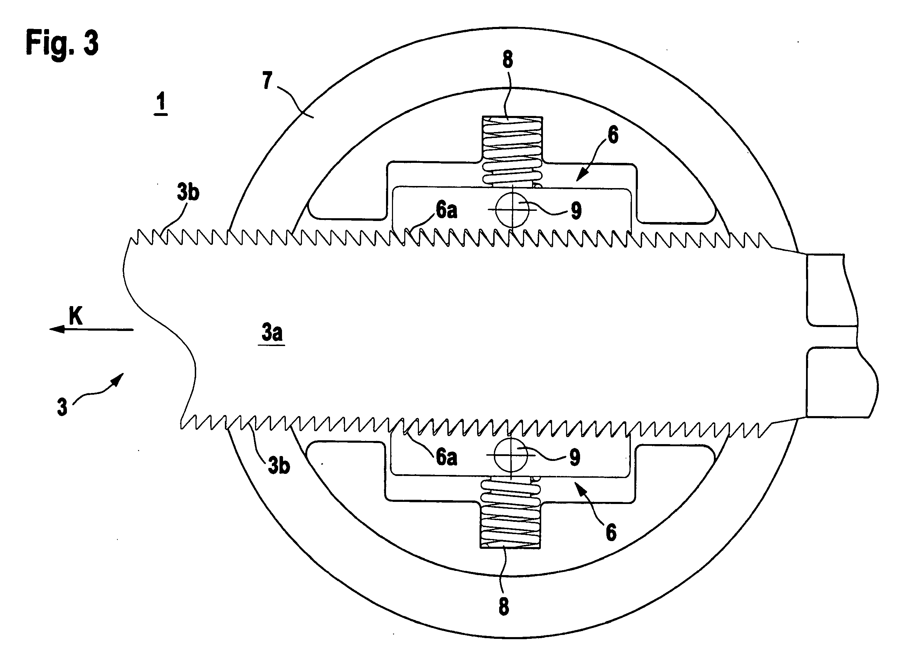

Figur 3 zeigt ein weiteres Ausbildungsbeispiel zur Lagefixierung eines Gegenstands. Der Gegenstand ist im vorliegenden Fall vom Führungselement 3 selbst gebildet, welches im vorliegenden Fall von einer Stange mit einem konstanten rechteckigen Querschnitt gebildet ist.

Die in einer Belastungseinrichtung auf das Führungselement 3 wirkende Kraft ist wiederum mit K bezeichnet.

Die das Führungselement 3 bildende Stange weist einen Grundkörper 3a und an zwei gegenüber liegenden Seiten des Grundkörpers 3a angeordnete Zahnungen auf, die jeweils von einer Reihenanordnung von Zähnen 3b gebildet sind. Die Zähne 3b sind jeweils identisch ausgebildet und in Längsrichtung der Stange hintereinander angeordnet. Die Zähne 3b erstrecken sich jeweils über die gesamte Breite der Stange. Analog zur Ausführungsform gemäß der Figuren 1 und 2 sind die Zähne 3b, 4b des Führungselements 3 asymmetrisch ausbildet, wobei die in Richtung der Kraft K liegenden Flanken der Zähne 3b eine höhere Flankensteilheit als die der jeweils anderen Flanken der Zähne 3b, 4b aufweisen.

Als Rastelemente sind im vorliegenden Fall zwei Gleitsteine 6 vorgesehen. Die identisch ausgebildeten Gleitsteine 6 weisen an ihren Unterseiten jeweils eine Zahnung, bestehend aus einer Reihenanordnung von Zähnen 6a, auf, die jeweils mit einer Zahnung an der Stange im Eingriff gebracht werden können. Die Konturen der Zähne 6a der die Rastelemente bildenden Gleitsteine 6 sind wiederum an die Konturen der Zähne 3b der Zahnungen des Führungselements 3 angepasst. Demzufolge weisen die Zähne 6a der Gleitsteine 6 den Zähnen 3b des Führungselements 3 entsprechende Asymmetrien auf

Wie aus Figur 3 ersichtlich sind die Gleitsteine 6 in einem Gehäuse 7 gelagert. Dabei schließt an die Oberseite jedes Gleitsteins 6 ein Federelement 8 an. Jedes Federelement 8 mit dem zugeordneten Gleitstein 6 liegt in einer Aussparung de Gehäuses 7. Das Federelement 8 drückt den jeweiligen Gleitstein 6 gegen das Führungselement 3, so dass die Zahnungen beider Elemente in Eingriff miteinander sind.

Durch die Asymmetrie der Zahnungen am Führungselement 3 und an den Gleitsteinen 6 wird eine Bewegung des Führungselements 3 in Richtung der Kraft K blockiert. Dagegen kann jedoch das Führungselement 3 gegen die Kräfte des Federelements 8 in entgegen gesetzter Richtung bewegt werden.

Zu Einstell- oder Justagezwecken kann die das Führungselement 3 bildende Stange entriegelt werden. Hierzu kann eine nicht dargestellte Spreizzange mit ihren freien Vorderenden in Löcher 9 in den Gleitsteinen 6 eingeführt werden.

Durch Spreizen der Vorderenden der Spreizzange werden diese aufgespreizt. Durch die Spreizbewegung werden die Gleitsteine 6 von der Stange abgeschoben, so dass diese frei bewegt werden kann und so in eine definierte Position überführt werden kann.

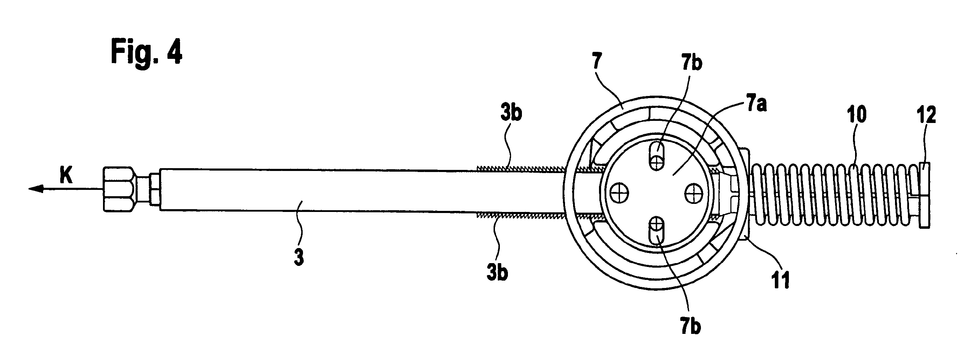

Die Vorrichtung 1 gemäß Figur 3 kann insbesondere für eine automatische Seilzugnachstellung eingesetzt werden. Eine derartige Anordnung ist in Figur 4 dargestellt.

Figur 4 zeigt das mit einem Deckel 7a verschlossene Gehäuse 7, in welchem die Gleitsteine 6 mit den Federelementen 8 zur Lagefixierung des Führungselements 3 integriert sind. In dem Deckel 7a befinden sich zwei Langlöcher 7b, durch welche die Spreizzange in die Löcher 9 eingeführt werden kann. Entsprechend der Länge der Langlöcher 7b können mit der Spreizzange die Gleitsteine 6 um einen definierten Hub von dem Führungselemente 3 abgehoben werden.

Das Führungselement 3 bildet in diesem Fall das Kopfteil eines Seilzuges. Entsprechend der Seilzugspannung wird eine Kraft K auf das Führungselement 3 ausgeübt, wie aus Figur 4 ersichtlich ist. Zur automatischen Seilzugnachstellung ist eine Feder 10 vorgesehen. Die Feder 10 sitzt auf dem Vorderteil des Führungselements 3 auf Die Feder 10 liegt zwischen einem ersten Anschlag 11 am Gehäuse 7 und einem zweiten ortsfesten Anschlag 12, der vom Vorderende des Führungselements 3 gebildet ist.

Vermindert sich die Seilzugspannung, so überschreitet die Differenz der Kraft K und der von der Feder 10 ausgeübten Federkraft die von den Federelementen 8 ausgeübten Kräfte auf die Gleitsteine 6, so dass das Führungselement 3 entlang der Gleitsteine 6 nach rechts in Richtung der Feder 10 geschoben wird. Dadurch erhöht sich wieder die Seilzugspannung, d. h. die Kraft K wird größer. Die Bewegung des Führungselements 3 endet dann, wenn die Differenzkraft wieder kleiner als die Kräfte der Federelemente 8 ist, so dass das Führungselement 3 in der neuen Position fest an den Gleitsteinen 6 liegt. Durch eine geeignete Dimensionierung der Federelemente 8 und der Feder 10 kann somit die Seilzugspannung automatisch auf einen vorgegebenen Wert eingestellt werden.

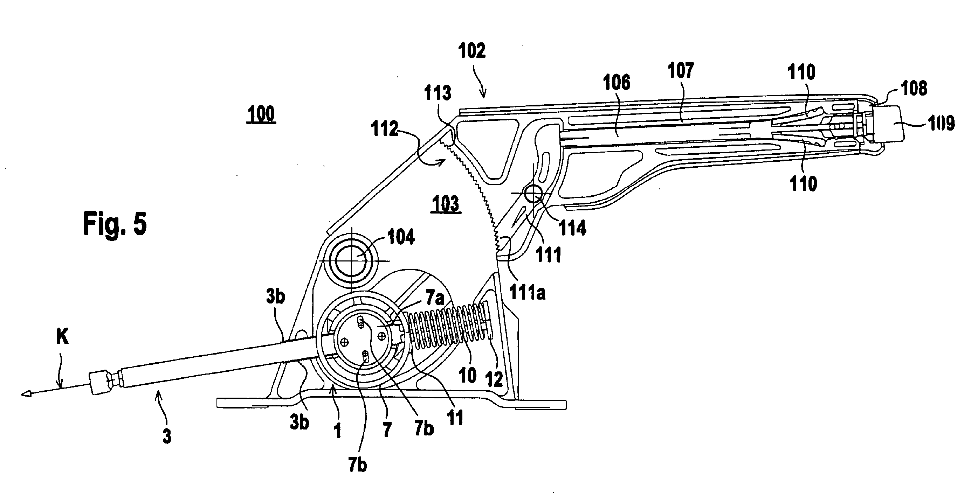

Figur 5 zeigt den Einsatz der Vorrichtung 1 gemäß den Figuren 3 und 4 als Seilzugnachstellung in einer Betätigungsvorrichtung 100 für eine Feststellbremse in einem Fahrzeug.

Die Betätigungsvorrichtung 100 weist einen Handbremshebel 102 auf, welcher um eine horizontale Achse schwenkbar an einem Lagerbock 103 gelagert ist. Der Handbremshebel 102 ist dabei an einem Lagerzapfen 104 schwenkbar gelagert. Der Handbremshebel 102 weist einen Grundkörper auf, dessen Vorderende in Form eines Rohrsegments ausgebildet ist.

Am Lagerbock 103 ist als Führungselement 3 der Seilzugnachstellung ein Anschlusselement für einen nicht dargestellten Seilzug vorgesehen. Die jeweilige Stellung des Handbremshebels 102 wird über den Seilzug auf die nicht dargestellte Feststellbremse des Fahrzeugs übertragen.

In dem Handbremshebel 102 ist eine Betätigungsstange 106 gelagert, die im vorliegenden Fall einstückig ausgebildet ist und aus einem Kunststoff-Spritzteil besteht. Die Betätigungsstange 106 besteht dabei aus glasfaserverstärktem Kunststoff. Die Betätigungsstange 106 verläuft im Wesentlichen längs einer Geraden und ist in einem Hohlraum 107 des Handbremshebels 102 geführt. Am vorderen Ende des Rohrsegments, ist eine Öffnung 108 vorgesehen, durch welches das vordere Ende der Betätigungsstange 106 hervorsteht. An diesem vorderen Ende der Betätigungsstange 106 ist ein Druckknopf 109 befestigt. Die Betätigung des Druckknopfs 109 erfolgt gegen eine von Federelementen 110 ausgeübten Federkraft, welche Bestandteil der Betätigungsstange 106 sind.

Die Betätigungsstange 106 ist an eine Festsetzeinrichtung gekoppelt. Mit dieser Festsetzeinrichtung kann der Handbremshebel 102 in einer vorgegebenen Schwenkstellung fixiert werden. Die Festsetzeinrichtung weist eine Sperrklinke 111 und ein Sperrsegment 112 auf. Das Sperrsegment 112 ist einstückig mit dem Lagerbock 103 ausgebildet und weist eine Leiste mit Rastzähnen 113 auf. Die Sperrklinke 111 weist an ihrem unteren Ende eine Rastnase 111a auf, die an den Rastzähnen 113 des Sperrsegments 112 eingerastet werden kann. Das obere Ende der Sperrklinke 111 ist mit der Betätigungsstange 106 gekoppelt.

Die Sperrklinke 111 ist an einem Lagerzapfen 114 um eine Schwenkachse drehbar am Handbremshebel 102 gelagert. Im Bereich des Lagerzapfens 114 ist zudem eine nicht dargestellte Klinkenfeder gelagert. Diese Klinkenfeder greift an dem dem Sperrsegment 112 abgewandten Rand der Sperrklinke 111 an und übt somit eine Kraft auf die Sperrklinke 111 in Richtung des Sperrsegments 112 aus.

Zur Fixierung des Handbremshebels 102 befindet sich die Sperrklinke 111 in einer Raststellung am Sperrsegment 112. Durch Betätigung des Druckknopfs 109 kann die Sperrklinke 111 aus dem Sperrsegment 112 gelöst und damit der Handbremshebel 102 geschwenkt werden.

Die Schwenkbewegung des Handbremshebels 102 wird auf den im Führungselement 3 gelagerten Seilzug übertragen. Die Richtung der dabei wirkenden Seilzugkraft ist in Figur 1 mit K bezeichnet.

Zur selbsttätigen Nachstellung des Seilzugs ist die von der Vorrichtung 1 gemäß den Figuren 3 und 4 gebildete Seilzugnachstelleinheit vorgesehen.

Durch die von den Federelementen 8 ausgeübten Anstellkräfte blockieren die Gleitsteine 6 eine Bewegung des Führungselements 3 in Richtung der Seilzugkraft K, da aufgrund der hohen Flankensteilheiten der dem Seilzug zugewandten Flanken der Zähne 3b des Führungselements 3 ein Herauslösen des Führungselements 3 aus der Raststellung in den Gleitsteinen 6 nicht möglich ist.

Aufgrund der geringeren Flankensteilheiten der dem Seilzug abgewandten Flanken der Zähne 3b des Führungselements 3 kann jedoch dieses entgegen der Kraftrichtung K verschoben werden, falls die von der Feder 10 ausgeübte Rückstellkraft groß genug ist, die Anstellkräfte, die durch die Gleitsteine 6 auf das Führungselement 3 ausgeübt werden, zu überwinden.

Durch die asymmetrische Ausbildung der Zähne 3b des Führungselements 3 und der Zähne 6a der Gleitsteine 6 wird somit einerseits eine sichere Kraftübertragung zwischen Seilzug und Betätigungsvorrichtung 100 erhalten und andererseits die automatische Seilzugnachstellung ermöglicht.

Die Seilzugkraft K wird dabei selbsttätig auf einen durch die Dimensionierungen der Feder 10 und der Federelemente 8, die auf die Gleitsteine 6 wirken, vorgegeben, da bei einem Unterschreiten dieses Sollwerts das Führungselement 3 entgegen der Seilzugkraft K gegen die Gleitsteine 6 so lange verschoben wird, bis die Seilzugkraft K wieder so groß ist, dass sie dem Sollwert entspricht, so dass dann wieder ein Gleichgewicht zwischen der Seilzugkraft K und den von der Feder 10 ausgeübten Rückstellkraft herrscht.

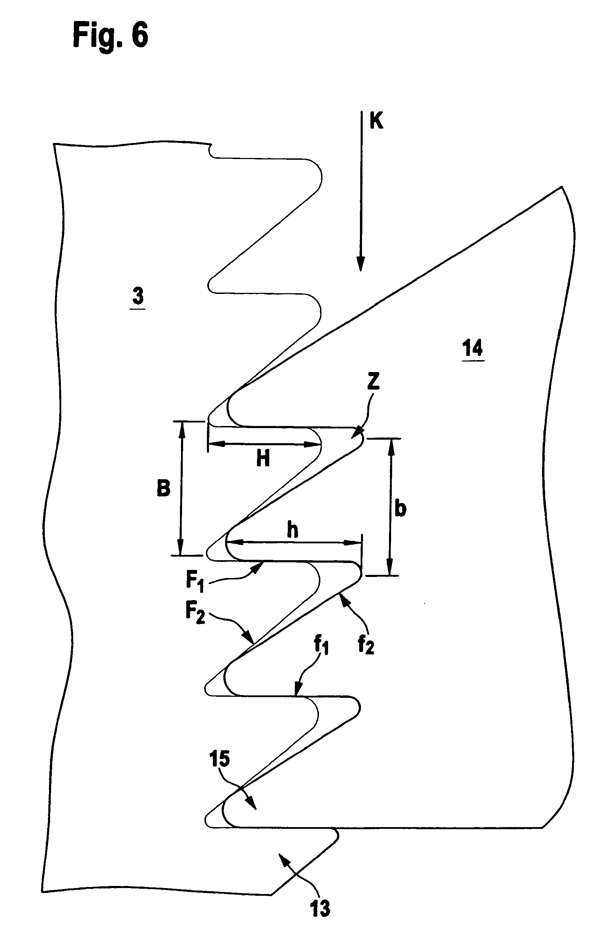

Figur 6 zeigt ein Ausführungsbeispiel einer Vorrichtung 1 gemäß der Erfindung zur Lagefixierung eines Gegenstands. Das Führungselement 3 ist in diesem Fall von einer Rastleiste gebildet. Das Führungselement 3 weist eine Leiste von identisch ausgebildeten Rastzähnen 13 auf Der Rastnocken 14 weist entsprechend eine Leiste mit Zähnen 15 auf. Die Rastleiste kann in Eingriff mit einem ein Rastelement bildenden Rastnocken 14 gebracht werden.

Wie aus Figur 6 ersichtlich, weisen die Rastzähne 13 des Führungselements 3 und entsprechend die Zähne 15 des Rastnockens 14 eine asymmetrische Form auf. Die Rastzähne 13 des Führungselements 3 weisen jeweils eine steile Flanke F₁ und eine flache Flanke F₂ auf, die auf die Spitze des jeweiligen Rastzahns 13 zulaufen. Die Spitze des Rastzahns 13 ist abgerundet. Entsprechend weist auch jeder Zahn 15 des Rastnockens 14 eine steile Flanke f1 und eine flache Flanke f2 auf, welche auf eine abgerundete Spitze zulaufen.

Der Übergangsbereich zwischen zwei Rastzähnen 13 weist entsprechend der abgerundeten Spitzen der Zähne 15 Abrunden auf. Entsprechend weisen die Übergangsbereiche zwischen zwei Zähnen 15 entsprechend der abgerundeten Spitzen der Rastzähne 13 Abrunden auf. Weiterhin sind die Basisbreiten B der Rastzähne 13 an die Basisbreiten b der Zähne 15 angepasst. Auf diese Weise wird der in Figur 5 dargestellte Eingriff der Zähne 15 des Rastnockens in die Rastzähne 13 des Führungselements 3 erzielt, wenn der Rastnocken 14 ohne Lasteinwirkung im Führungselement 3 eingerastet ist. Die steilen Flanken F₁ der Rastzähne 13 liegen dabei dicht an den steilen Flanken f₁ der Zähne 15 an. Die abgerundeten Spitzen der Zähne 15 liegen jeweils dicht in den abgerundeten Bereichen zwischen zwei Rastzähnen 13 an.

Wie aus Figur 6 weiter ersichtlich, sind die Höhen H der Rastzähne 13 des Führungselements 3 kleiner als die Höhen h der Zähne 15 des Rastnockens 14. Dadurch bedingt verbleiben kleine Zwischenräume Z zwischen den Spitzen der Rastzähne 13 und den Basisbereichen zwischen zwei Zähnen 15 des Rastnockens 14.

Bei der erfindungsgemäßen Vorrichtung 1 gemäß Figur 6 wirken Kräfte K in einer in vertikaler Richtung verlaufenden Belastungsrichtung. Die Kräfte K wirken somit auf die steilen Flanken f₁, F₂, der Zähne 15 und Rastzähne 13. Da sowohl die Zähne 15 des Rastnockens 14 als auch der Rastzähne 13 des Führungselements 3 aus Kunststoff bestehen, weisen diese in gewissem Umfang eine elastische Verformbarkeit auf. Unter der einwirkenden Kraft K, die auf die steilen Flanken f₁, F₁ der Zähne 15 und Rastzähne 13 derart statt, dass die Zwischenräume Z durch diese Deformation aufgefüllt werden. Damit wird bedingt durch die Kraft K der Eingriff der Zähne 15 in den Rastzähnen 13 erhöht und der Halt des Rastnockens 14 am Führungselement 3 verbessert.

### Bezugszeichenliste

- (1): Vorrichtung
- (2): Haken
- (3): Führungselement
- (3a): Grundkörper
- (3b): Zähne
- (4): Einsatz
- (4a): Schrägfläche
- (4b): Zähne
- (5): Hülse
- (5a): Aufnahme
- (5b): Segment
- (6): Gleitstein
- (6a): Zähne
- (7): Gehäuse
- (7a): Deckel
- (7b): Langloch
- (8): Federelement
- (9): Loch
- (10): Feder
- (11): Anschlag
- (12): Anschlag
- (13): Rastzähne
- (14): Rastnocken
- (15): Zähne
- (100): Betätigungsvorrichtung
- (102): Handbremshebel
- (103): Lagerbock
- (104): Lagerzapfen
- (106): Betätigungsstange
- (107): Hohlraum
- (108): Öffnung
- (109): Druckknopf
- (110): Federelement
- (111): Sperrklinke
- (111a): Rastnase
- (112): Sperrsegment
- (113): Rastzähne
- (114): Lagerzapfen

## Patentansprüche

1. Vorrichtung (1) zur Lagefixierung eines Gegenstands mit einem eine erste Zahnung aufweisenden Führungselement (3) und mit wenigstens einem Rastelement mit einer zweiten Zahnung, welches zur Lagefixierung in Eingriff mit der ersten Zahnung des Führungselements (3) bringbar ist, **dadurch gekennzeichnet, dass** die Zähne (3b, 4b, 6a, 15) der Zahnungen elastisch verformbar sind, wobei durch die elastischen Verformungen bei in einer Belastungsrichtung wirkenden Kräften die hierbei gegeneinander gepressten Flanken der Zähne (3b, 4b, 6a, 15) formschlüssig aneinander anliegen.

2. Vorrichtung nach Anspruch 1, **dadurch gekennzeichnet, dass** bei einer in der Belastungsrichtung wirkenden Kraft das Führungselement (3) im Rastelement lagefixiert ist, und dass das Führungselement (3) entgegen der Belastungsrichtung gegen das Rastelement bewegbar ist.

3. Vorrichtung nach einem der Ansprüche 1 oder 2, **dadurch gekennzeichnet, dass** der zu fixierende Gegenstand das Führungselement (3) ist.

4. Vorrichtung nach einem der Ansprüche 1 oder 2, **dadurch gekennzeichnet, dass** der zu fixierende Gegenstand mit dem Führungselement (3) verbunden ist.

5. Vorrichtung nach einem der Ansprüche 1 bis 4, **dadurch gekennzeichnet, dass** jede Zahnung von einer Reihenanordnung von asymmetrisch ausgebildeten Zähnen (3b, 4b, 6a, 15) ausgebildet ist, welche jeweils zwei auf eine Spitze zulaufende Flanken aufweisen.

6. Vorrichtung nach Anspruch 5, **dadurch** gekenntzeichnet, dass die ersten Flanken der Zähne (3b, 4b, 6a, 15) der Zahnungen, welche durch in Belastungsrichtung wirkende Kräfte gegeneinander gepresst sind, eine höhere Flankensteilheit aufweisen als die jeweils zweiten Flanken der Zähne (3b, 4b, 6a, 15).

7. Vorrichtung nach einem der Ansprüche 1 bis 6, **dadurch gekennzeichnet, dass** das Führungselement (3) und das Rastelement jeweils aus Kunststoff besteht.

8. Vorrichtung nach einem der Ansprüche 1 bis 7, **dadurch gekennzeichnet, dass** das oder jedes Rastelement mittels einer vorgegebenen Anstellkraft gegen das Führungselement (3) gedrückt ist.

9. Vorrichtung nach einem der Ansprüche 1 bis 8, **dadurch gekennzeichnet, dass** das Führungselement (3) einen rotationssymmetrischen Querschnitt aufweist, und dass als Rastelemente an den Innenwänden einer Hülse (5) gelagerte Einsätze (4) vorgesehen sind, wobei die Innenwände mit den Einsätze (4) einen Hohlraum begrenzen, in welche das Führungselement (3) einführbar ist.

10. Vorrichtung nach Anspruch 9, **dadurch gekennzeichnet, dass** die Hülse (5) die Anstellkräfte auf die Rastelemente ausübt

11. Vorrichtung nach einem der Ansprüche 9 oder 10, **dadurch gekennzeichnet, dass** die Einsätze (4) identisch ausgebildet und drehsymmetrisch bezüglich der Symmetrieachse des in den Hohlraum eingeführten Führungselements (3) angeordnet sind.

12. Vorrichtung nach einem der Ansprüche 9 bis 11, **dadurch gekennzeichnet, dass** das Führungselement (3) einen kreiszylindrischen Grundkörper (3a) aufweist, an dessen Mantelfläche die Zahnungen bildende Zähne (3b) in Längsrichtung des Führungselement (3) hintereinander angeordnet sind.

13. Vorrichtung nach Anspruch 12, **dadurch gekennzeichnet, dass** sich die jeweils identischen Zähne (3b) der Zahnung über den gesamten Umfang des Grundkörpers (3a) des Führungselements (3) erstrecken.

14. Vorrichtung nach einem der Ansprüche 9 bis 13, **dadurch gekennzeichnet, dass** die Innenwand mit den darin gelagerten, die Rastelemente bildenden Einsätze (4) einen hohlzylindrischen Hohlraum begrenzt, dessen Durchmesser an den Außendurchmesser des Führungselements (3) angepasst sind.

15. Vorrichtung nach einem der Ansprüche 9 bis 14, **dadurch gekennzeichnet, dass** Segmente (5b) der Innenwand konische, sich von einem ersten längsseitigen Ende zum zweiten längsseitigen Ende der Hülse (5) hin verjüngende Aufnahmen (5a) für die Einsätze (4) bilden.

16. Vorrichtung nach Anspruch 15, **dadurch gekennzeichnet, dass** die Aufnahmen (5a) Ausnehmungen in der Innenwand der Hülse (5) bilden.

17. Vorrichtung nach einem der Ansprüche 15 oder 16, **dadurch gekennzeichnet, dass** die in den Aufnahmen (5a) liegenden Rückseiten der Einsätze (4) Schrägflächen bilden.

18. Vorrichtung nach einem der Ansprüche 16 oder 17, **dadurch gekennzeichnet, dass** die Ausnehmungen am ersten längsseitigen Ende der Hülse (5) frei ausmünden, so dass die in Eingriff mit dem Führungselement (3) stehenden Rastelemente über dieses Ende der Hülse (5) ausführbar sind.

19. Vorrichtung nach Anspruch 8, **dadurch gekennzeichnet, dass** die Anstellkraft von einer Federkraft gebildet ist.

20. Vorrichtung nach Anspruch 19, **dadurch gekennzeichnet, dass** das Führungselement (3) von einer Stange mit einem rechteckigen Querschnitt gebildet ist, wobei an zwei gegenüberliegenden Seiten der Stange jeweils eine Zahnung vorgesehen ist, welche jeweils mit der Zahnung eines Rastelements in Eingriff bringbar ist

21. Vorrichtung nach Anspruch 20, **dadurch gekennzeichnet, dass** die Rastelemente jeweils von einem Gleitstein (6) gebildet sind, welcher mittels eines Federelements (8) gegen das Führungselement (3) gepresst ist.

22. Vorrichtung nach einem der Ansprüche 20 oder 21, **dadurch gekennzeichnet, dass** die Zahnungen an der Stange identisch ausgebildet sind.

23. Vorrichtung nach einem der Ansprüche 21 oder 22, **dadurch gekennzeichnet, dass** die Gleitsteine (6) identisch ausgebildet sind.

## Claims

1. Device (1) for positional fixing of an object, comprising a guide element (3), which has a first toothing, and at least one detent element with a second toothing, which for the positional fixing is brought into engagement with the first toothing of the guide element (3), **characterised in that** the teeth (3b, 4b, 6a, 15) of the toothings are resiliently deformable, wherein, through the resilient deformations in the case of forces acting in a direction of loading, the flanks, which are thereby pressed against one another, of the teeth (3b, 4b, 6a, 15) bear in shape-locking manner against one another.

2. Device according to claim 1, **characterised in that** when a force acts in the direction of loading the guide element (3) is positionally fixed in the detent element and that the guide element (3) is movable towards the detent element against the direction of loading.

3. Device according to one of claims 1 and 2, **characterised in that** the object to be fixed is the guide element (3).

4. Device according to one of claims 1 and 2, **characterised in that** the object to be fixed is connected with the guide element (3).

5. Device according to any one of claims 1 to 4, **characterised in that** each toothing is formed by a serial arrangement of asymmetrically formed teeth (3b, 4b, 6a, 15) which each have two flanks running to a tip.

6. Device according to claim 5, **characterised in that** the first flanks of the teeth (3b, 4b, 6a, 15) of the toothings, which are pressed against one another by forces acting in the direction of loading, have a higher flank gradient than the respective second flanks of the teeth (3b, 4b, 6a, 15).

7. Device according to any one of claims 1 to 6, **characterised in that** the guide element (3) and the detent element each consist of plastics material.

8. Device according to any one of claims 1 to 7, **characterised in that** the or each detent element is pressed against the guide element (3) by means of a predetermined adjusting force.

9. Device according to any one of claims 1 to 8, **characterised in that** the guide element (3) has a rotationally symmetrical cross-section and that inserts (4) mounted at the inner walls of the sleeve (5) are provided as detent elements, wherein the inner walls together with the inserts (4) bound a cavity into which the guide element (3) is introducible.

10. Device according to claim 9, **characterised in that** the sleeve (5) exerts the adjusting forces on the detent elements.

11. Device according to one of claims 9 and 10, **characterised in that** the inserts (4) are of identical construction and are arranged to be rotationally symmetrical with respect to the axis of symmetry of the guide element (3) introduced into the cavity.

12. Device according to any one of claims 9 to 11, **characterised in that** the guide element (3) has a circularly cylindrical base body (3a), at the circumferential surfaces of which teeth (3b) forming the toothings are arranged one behind the other in longitudinal direction of the guide element (3).

13. Device according to claim 12, **characterised in that** the respectively identical teeth (3b) of the toothing extend over the entire circumference of the base body (3a) of the guide element (3).

14. Device according to any one of claims 9 to 13, **characterised in that** the inner wall together with the inserts (4) which are mounted therein and form the detent elements bounds a hollow-cylindrical cavity, the diameter of which is matched to the external diameter of the guide element (3).

15. Device according to any one of claims 9 to 14, **characterised in that** the segments (5b) of the inner wall form conical receptacles (5a), which taper from a first longitudinal-side end to the second longitudinal-side end of the sleeve (5), for the inserts (4).

16. Device according to claim 15, **characterised in that** the receptacles (5a) form recesses in the inner wall of the sleeve (5).

17. Device according to one of claims 15 and 16, **characterised in that** the rear sides, which lie in the receptacles (5a), of the inserts (4) form inclined surfaces.

18. Device according to one of claims 16 and 17, **characterised in that** the recesses freely open at the first longitudinal-side end of the sleeve (5) so that the detent elements standing in engagement with the guide element (3) can be led out beyond this end of the sleeve (5).

19. Device according to claim 8, **characterised in that** the adjusting force is formed by a spring force.

20. Device according to claim 19, **characterised in that** the guide element (3) is formed by a rod with a rectangular cross-section, wherein a respective toothing is provided at each of two opposite sides of the rod and can be respectively brought into engagement with the toothing of a detent element.

21. Device according to claim 20, **characterised in that** the detent elements are each formed by a slide block (6) which is pressed against the guide element (3) by means of a spring element (8).

22. Device according to one of claims 20 and 21, **characterised in that** the toothings at the rod are of identical construction.

23. Device according to one of claims 21 and 22, **characterised in that** the slide blocks (6) are of identical construction.

## Revendications

1. Dispositif (1) de blocage à demeure d'un objet, comprenant un élément de guidage (3) muni d'une première denture, et au moins un élément d'encliquetage qui est muni d'une seconde denture et peut être mis en prise avec la première denture dudit élément de guidage (3), en vue du blocage à demeure, **caractérisé par le fait que** les dents (3b, 4b, 6a, 15) des dentures sont déformables élastiquement, sachant que, suite aux déformations élastiques, lorsque des forces de serrage agissent dans une direction de contrainte, les flancs desdites dents (3b, 4b 6a, 15), pressés les uns contre les autres, sont en contact mutuel par conformation.

2. Dispositif selon la revendication 1, **caractérisé par le fait que** l'élément de guidage (3) est consigné à demeure dans l'élément d'encliquetage lorsqu'une force agit dans la direction de contrainte ; et **par le fait que** ledit élément de guidage (3) peut être mû vers ledit élément d'encliquetage en sens inverse de ladite direction de contrainte.

3. Dispositif selon l'une des revendications 1 ou 2, **caractérisé par le fait que** l'objet devant être bloqué à demeure se présente comme l'élément de guidage (3).

4. Dispositif selon l'une des revendications 1 ou 2, **caractérisé par le fait que** l'objet devant être bloqué à demeure est relié à l'élément de guidage (3).

5. Dispositif selon l'une des revendications 1 à 4, **caractérisé par le fait que** chaque denture est constituée d'un alignement de dents (3b, 4b, 6a, 15) de réalisation asymétrique, respectivement dotées de deux flancs convergeant vers une pointe.

6. Dispositif selon la revendication 5, **caractérisé par le fait que** les premiers flancs des dents (3b, 4b, 6a, 15) des dentures, qui sont pressés les uns contre les autres par des forces agissant dans la direction de contrainte, offrent une pente plus accentuée que celle des seconds flancs considérés desdites dents (3b, 4b, 6a, 15).

7. Dispositif selon l'une des revendications 1 à 6, **caractérisé par le fait que** l'élément de guidage (3) et l'élément d'encliquetage sont respectivement constitués d'une matière plastique.

8. Dispositif selon l'une des revendications 1 à 7, **caractérisé par le fait que** l'élément, ou chaque élément d'encliquetage, est pressé contre l'élément de guidage (3) par une force de serrage préétablie.

9. Dispositif selon l'une des revendications 1 à 8, **caractérisé par le fait que** l'élément de guidage (3) présente une section transversale à symétrie de révolution ; et **par le fait que** des pièces intégrées (4), implantées sur les parois intérieures d'une douille (5), sont prévues en tant qu'éléments d'encliquetage, lesdites parois intérieures délimitant, avec lesdites pièces intégrées (4), une cavité dans laquelle ledit élément de guidage (3) peut être inséré.

10. Dispositif selon la revendication 9, **caractérisé par le fait que** la douille (5) applique les forces de serrage aux éléments d'encliquetage.

11. Dispositif selon l'une des revendications 9 ou 10, **caractérisé par le fait que** les pièces intégrées (4) sont de réalisations identiques et sont agencées avec symétrie de révolution vis-à-vis de l'axe de symétrie de l'élément de guidage (3) introduit dans la cavité.

12. Dispositif selon l'une des revendications 9 à 11, **caractérisé par le fait que** l'élément de guidage (3) présente un corps de base (3a) de forme cylindrique droite sur la surface de l'enveloppe duquel les dents (3b), formant des dentures, sont agencées en succession dans la direction longitudinale dudit élément de guidage (3).

13. Dispositif selon la revendication 12, **caractérisé par le fait que** les dents (3b) de la denture, respectivement identiques, s'étendent sur tout le pourtour du corps de base (3a) de l'élément de guidage (3).

14. Dispositif selon l'une des revendications 9 à 13, **caractérisé par le fait que** la paroi intérieure délimite, avec les pièces intégrées (4) qui y sont logées et matérialisent les éléments d'encliquetage, une cavité en forme de cylindre creux dont le diamètre est adapté au diamètre extérieur de l'élément de guidage (3).

15. Dispositif selon l'une des revendications 9 à 14, **caractérisé par le fait que** des segments (5b) de la paroi intérieure forment des logements (5a) destinés aux pièces intégrées (4) et se rétrécissant depuis une première extrémité longitudinale jusqu'à la seconde extrémité longitudinale de la douille (5).

16. Dispositif selon la revendication 15, **caractérisé par le fait que** les logements (5a) se présentent comme des évidements pratiqués dans la paroi intérieure de la douille (5).

17. Dispositif selon l'une des revendications 15 ou 16, **caractérisé par le fait que** les faces postérieures des pièces intégrées (4), situées dans les logements (5a), forment des surfaces inclinées.

18. Dispositif selon l'une des revendications 16 ou 17, **caractérisé par le fait que** les évidements débouchent librement à la première extrémité longitudinale de la douille (5), de sorte que les éléments d'encliquetage en prise avec l'élément de guidage (3) peuvent être extraits par l'intermédiaire de cette extrémité de ladite douille (5).

19. Dispositif selon la revendication 8, **caractérisé par le fait que** la force de serrage est développée par une force élastique.

20. Dispositif selon la revendication 19, **caractérisé par le fait que** l'élément de guidage (3) revêt la forme d'une tige de section transversale rectangulaire, une denture respective, pouvant être mise en prise avec la denture considérée d'un élément d'encliquetage, étant prévue sur deux faces opposées de ladite tige.

21. Dispositif selon la revendication 20, **caractérisé par le fait que** les éléments d'encliquetage sont respectivement formés d'une pièce coulissante (6) pressée contre l'élément de guidage (3) au moyen d'un élément élastique (8).

22. Dispositif selon l'une des revendications 20 ou 21, **caractérisé par le fait que** les dentures sont de réalisations identiques sur la tige.

23. Dispositif selon l'une des revendications 21 ou 22, **caractérisé par le fait que** les pièces coulissantes (6) sont de réalisations identiques.
